# EUROPEAN PATENT SPECIFICATION

(11) **EP 2 354 565 B1**
(45) Date of publication and mention of the grant of the patent: **20.02.2013**
(21) Application number: 10425356.2
(22) Date of filing: 19.11.2010
(51) Int. Cl.: F16B 2/06

(54) **Modular pliers for arranging technical furniture, protection and/or delimitation structures**
Modulare Klemmen für die Anordnung von technischen Möbel-, Schutz- und/oder Abgrenzungsstrukturen
Brides de serrage modulaire pour agencement du mobilier technique, la protection et/ou structures de délimitation

(30) Priority: 02.02.2010 IT VI20100019
(43) Date of publication of application: 10.08.2011
(73) Proprietor: IND.I.A. S.p.A., 36034 Malo (VI) (IT)
(72) Inventor: Gonzato, Dario, 36034 Malo(VI) (IT)
(74) Representative: Iannone, Carlo Luigi

(56) References cited:
- EP-A2- 1 764 517
- BE-A- 388 449
- DE-A1- 3 727 486
- DE-U1- 8 604 984

## Description

The present invention concerns universal use modular pliers for arranging technical furniture, protection and/or delimitation structures, such as for example panelling, partition walls, parapets, stairs banisters and similar, mounted in rooms of buildings of various kind.

An assembly of modular pliers is known from DE-A-3727486.

It is known that some technical structures currently installed in buildings for the purposes of furniture, protection and/or delimitation, in general, include a plurality of panels or slabs, even made of aesthetic value materials and provided with a thickness of a certain importance, for example glass, rigidly interconnected each other by a plurality of specific pliers, usually made of metallic material, such as satin steel.

The aforesaid pliers are attached to the support uprights or columns, usually defining vertical directions and having quadrilateral or circular section, of the technical structure.

In case they are coupled with intermediate uprights internal to the technical structure, the pliers house two prefixed portions of the perimetrical edge of inner slabs adjacent and side-by-side each other which contribute to the formation of the technical structure itself.

The pliers fixed to the end uprights, instead, house a prefixed portion of the perimetrical edge of sole terminal slab.

In particular, the conventional constructive type nowadays more widespread provides to apply two pliers per upright, one at the top and one at the bottom, ensuring for each slab four anchor points to the bearing structural elements.

More in detail, each pliers of known type designed for the use concerned include a rear block which is firmly coupled with the side wall of a bearing structural element, such as exactly an upright, of the technical structure.

The pliers also comprise a pair of shaped jaws associated with the rear block and placed opposite, facing and spaced apart each other in order to define at least one side seat communicating with the outside and adapted to house a perimetrical portion of a slab, made for example of satin or decorated glass, clamped between the shaped jaws themselves and belonging to the technical structure.

In particular, one of the two shaped jaws is monolithic with the rear block, while the other shaped block is connected with the rear block through fastening means of the type per se known.

Thereby combining the slabs to the pliers and the assembly thus formed to the vertical uprights, the operator sets up a technical furniture, delimitation and/or protection structure, provided with high rigidity and stability in application conditions.

However, the pliers of known type just briefly described, intended to arrange a technical furniture, protection and/or delimitation structure comprising at least two slabs facing each other, present some recognized drawbacks.

The main drawback of the prior art in question derives from the fact that it is necessary to get as many pliers as the thicknesses of the slab to be coupled with the bearing structural elements, such as the uprights or columns.

The range of pliers which are currently produced in order to effectively meet each specific and different requirement related to the various thicknesses of the slab, indeed, is rather broad and does not achieve even in small part that always desirable manufacturing, management and delivery modularity of such items.

It is reminded, indeed, that the slabs which are available in the market and can be coupled through pliers with structural elements in order to arrange the technical structures in question have several thicknesses, such as 4, 6, 8, 8.75, 10, 10.75, 12, 12.75, 16, 18, 20 mm, just to name those typical and more widespread ones.

Manufacturer's pliers catalogue so provides a specific rear block and, as a consequence, a special shaped jaws substantially for each of the thicknesses of the slab.

Therefore, just to allow the installer to apply appropriate pliers on the basis of the thickness of the slab used, pliers producers make available a large number of pliers which differ one from another in the shape and size of the component elements.

When, for whatever reason, it becomes necessary to change the thickness of the slab or at least apply even simultaneously, in the same technical structure, slabs which differ for thickness, it will be necessary to change the type of clamp pliers.

This is imposed by the construction design of the pliers, since always focused in providing the rear block in single body with one of the shaped jaws of clamping of the slab.

The adjustment allowed by the change of stiffening seals interposed between the face of the slab and respective jaw is minimum and purely formal, since these stiffening seals still present small thicknesses which differ each other for a few tenths of millimetre.

The current situation, for which as many pliers exist as many the thicknesses of the slabs of the technical structure are, on one hand prevents in substance to standardize the production, with consequent loss of productive efficiency, and on the other hand causes a proliferation of finished articles and related article codes, thereby increasing the complexity of managing the finished products warehouse.

The present invention aims to overcome the drawbacks of the state of the art just cited.

In particular, primary purpose of the invention is to devise modular pliers for arranging technical furniture, protection and/or delimitation structures which can be produced with a degree of standardization greater than the known technique, when the thickness of the slab to be coupled with the bearing structural elements through the pliers themselves varies.

In other words, main purpose of the invention is to allow the application of a slab, for example made of glass, of any thickness to bearing structural elements without the need to totally change the type of pliers suit for the purpose, as it currently happens instead.

Within such a purpose, it is a first task of the present invention to increase, compared to the known art, the production efficiency related to the production of pliers for arranging technical furniture, protection and/or delimitation structures.

It is a second task of the invention to simplify compared to the known technique the management of the finished goods warehouse related to pliers for arranging technical furniture, protection and/or delimitation structures, reducing article codes and space dedicated to the components belonging to these structures.

It is a last but not least purpose of the invention to provide modular pliers for arranging technical furniture, protection and/or delimitation structures simple to be manufactured.

Said purposes are achieved through modular pliers for arranging technical furniture, protection and/or delimitation structures according to the attached claim 1, as hereinafter referred for the sake of brevity.

Further technical features of detail of the modular pliers of the invention are set forth in the dependent claims.

Advantageously, unlike the known pliers, the invention allows for a certain degree of standardization in the production of pliers according to the variability of the thickness of the slabs which, through these pliers, are coupled with bearing structural elements in order to arrange technical furniture, protection and/or delimitation structures.

This thanks to the fact that the pliers of the invention are made of three pieces distinct and separated each other, that is the rear block and the two shaped jaws, removably coupled each other, in use conditions, through first fastening means.

By completely disengaging the jaws shaped from the rear block, the task of following the variability of the thickness of the slabs is entirely left to the rear block, the only component of the pliers of the invention to be produced in multiple examples, as many the thicknesses of the commercial slabs are precisely, while the two shaped jaws remain always unchanged and can be combined with any type of rear block.

The adjustment of the pliers of the invention to the type of slab of the technical structure is so delegated to the rear block, whose front surface, facing the side seat which houses the slab, has a width which can be adjusted during production to the various thicknesses of the slab.

The shaped jaws present, instead, fixed profile and sizes and are interchangeable in order to fit to the different operative situations related to the variability of the thickness of the slab of the technical structure.

By virtue of what just said, it is evident that the present invention allows to increase, compared to prior art, production efficiency related to the manufacture of pliers for arranging technical furniture, protection and/or delimitation structures.

Still advantageously, the invention limits, compared to the current state of the art, the number of components and, consequently, article codes related to pliers for arranging technical furniture, protection and/or delimitation structures, simplifying management of the finished goods warehouse referred to them, with special reference to the thickness of the slabs which, by means of the aforesaid pliers, are coupled with the bearing structural elements of the technical structures.

Equally advantageously, the modular pliers of the invention are simple to be produced and applied to the bearing structural element of the technical structure to be arranged.

Said purposes and advantages, as well as others that will emerge later, will appear to a greater extent by the following description, relating to preferred embodiments of the modular pliers of the invention, given by indicative and illustrative, but not limiting, way with the help of the attached drawings where:
- figure 1 is a first partial and exploded assonometric view of the modular pliers of the invention;
- figure 2 is a second partial and exploded assonometric view of the modular pliers of figure 1;
- figure 3 is a third partial and exploded assonometric view of the pliers of figure 1;
- figure 4 is a partial and exploded assonometric view of a first construction particular of the pliers of figures 1-3;
- figure 5 is a first side view of a second construction particular of the pliers of figures 1-3;
- figure 6 is a second side view of the construction particular of figure 5.

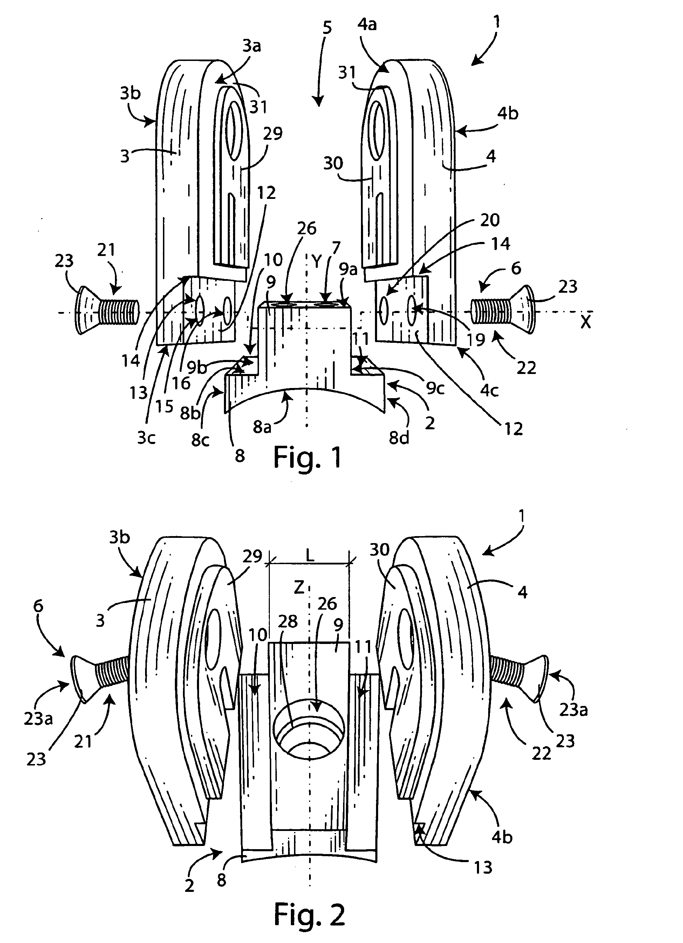

The modular pliers of the invention are shown in exploded and partial view in figures 1-3 in which it is as a whole numbered with 1.

The modular pliers 1 are mostly suitable for arranging a technical furniture, protection and/or delimitation structure, for simplicity not shown in the accompanying drawings and consisting of for example a stair banister or a partition wall of a room, including bearing structural elements, or uprights or columns, having a regular profile.

It is observed that the modular pliers 1 comprise:
- a rear block 2 suitable to be firmly coupled with the side wall of the structural element of the technical structure;
- a pair of shaped jaws 3, 4 associated with the rear block 2 and opposite, facing and spaced apart each other in order to define a side seat 5 communicating with the outside and able to house a perimetrical portion of a slab, such as made of glass, clamped between the shaped jaws 3, 4, and belonging to the technical structure.

In accordance with the invention, the shaped jaws 3, 4 are two pieces distinct and separated each other and from the rear block 2 with which are firmly and removably coupled through first fastening means, overall indicated with 6.

The modular pliers also include properly second fastening means, only partially visible in the attached figures where they are overall indicated with 7, provided for the stable connection of rear block 2 with the aforesaid bearing structural element.

In a preferred but not binding way, the rear block 2 consists of:
- a base sector 8, which presents a first lateral face 8a suitable to be conjugated to the side wall of the structural element of the technical structure;
- a spacing tooth 9, interposed between the shaped jaws 3, 4 and protruding from the central area of a second lateral face 8b, opposite to the first face 8a, of the base sector 8 so as to define with the latter a pair of linear steps 10, 11 positioned laterally to the spacing tooth 9 symmetrically with respect to the main development axis Z of the spacing tooth 9 itself.

More precisely, the spacing tooth 9 is made in single body with the base sector 8 and presents a front surface 9a, facing the side seat 5, and two lateral surfaces 9b, 9c which define planes equal and parallel each other.

Even the base sector 8 presents two outer walls 8c, 8d defining planes equal and parallel each other: a lower stretch 12 of the inner face 3a, 4a of the shaped jaws 3, 4 is placed close to such outer walls 8c, 8d.

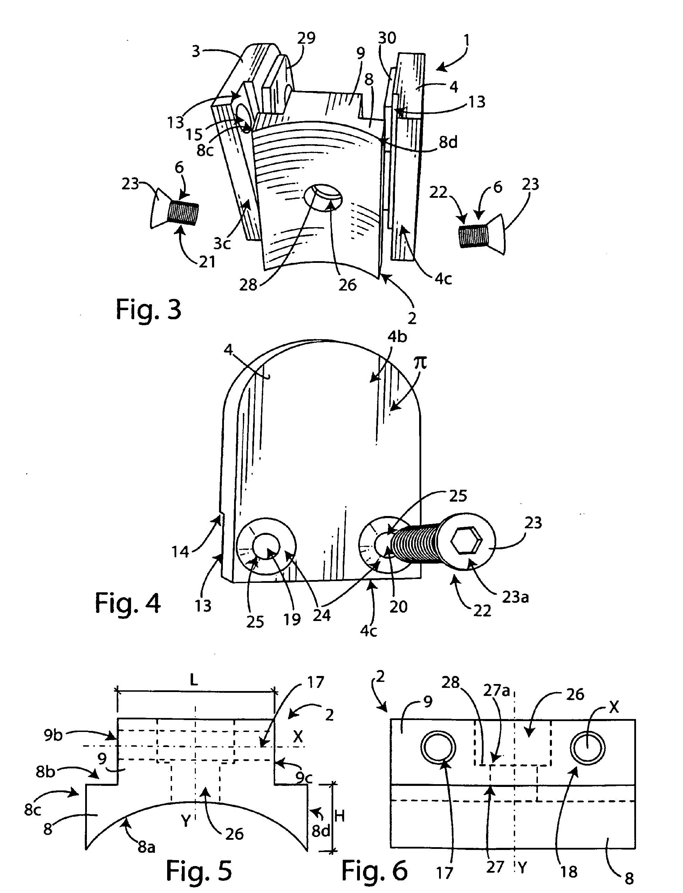

As figure 5 also well illustrates, the first lateral face 8a of the base sector 8 presents, in this case, a concave profile in cross section, as the modular pliers 1 are properly suited to be coupled with uprights, usually with vertical axis, having a circular profile in cross section.

In other embodiments of the invention, not shown, the first lateral face of the base sector will present a linear profile, in cross section: the modular pliers of the invention will then be conveniently coupled with bearing structural elements, such as uprights or columns, having a square profile in cross section.

In a preferred and advantageous way, the spacing tooth 9 presents a quadrilateral, in this case rectangular, profile in cross section and a width L which is varied during production depending on the thickness of the slab housed in the side seat 5 and clamped between the shaped jaws 3, 4.

In particular, the width L of the spacing tooth 9 is substantially equal to the thickness of the slab housed in the side seat 5.

Through the only variation of the width L of the spacing tooth 9, the modular pliers of the invention adapts, therefore, to any thickness of the slab to be coupled with the bearing structural element, without intervening in any way on the constructive shape of the shaped jaws 3, 4.

Preferably but not necessarily, each of the shaped jaws 3, 4 presents a substantially semi-elliptical shaped profile in longitudinal section, as well apparent from figure 4.

In addition, the shaped jaws 3, 5 present inner faces 3a, 4a which define planes parallel to the planes defined by the respective outer faces 3b, 4b.

More specifically, each of the shaped jaws 3, 4 presents a longitudinal undercut 13, made in the inner face 3a, 4a starting from the lower edge 3c, 4c towards the central area of each of the shaped jaws 3, 4.

The longitudinal undercut 13 defines the lower stretch 12, placed close to the respective outer walls 8c, 8d of the base sector 8, and a transverse wall 14 placed close to the second face 8b of the base sector 8 along each of the linear steps 10, 11.

The aforesaid lower stretch 12 of the inner face 3a, 4a of each of the shaped jaws 3, 4 presents substantially the same height H of each of the outer walls 8c, 8d of the base sector 8.

According to the preferred embodiment of the invention here described, the first fastening means 6 include, as figures 1-4 highlights:
- two first through nut screws 15, 16, made in the first shaped jaw 3 at the lower stretch 12 according to a respective longitudinal axis X orthogonal to the plane Π defined by the inner face 3a of the shaped jaw 3;
- two second through nut screws 17, 18, better seen in figure 6, made in the spacing tooth 9, each of which coaxial to one of the first nut screws 15, 16;
- two third through nut screws 19, 20, made in a second shaped jaw 4 at the lower section 12, each of which coaxial to one of the first nut screws 15, 16 and one of the second nut screws 17, 18;
- two pairs of screws, only two of which visible in figures 1-4 where they are indicated with 21, 22: a first screw 21 engages the first nut screw 15 and partly in the second nut screw 18, while the second screw 22 engages the third nut screw 19 and partly in the second nut screw 18 on the opposite side with respect to the first screw 21.

Preferably but not exclusively, each of the screws 21, 22 is of the flat countersunk head (TPS) 23 type, housed in an annular groove 24 made around the inlet 25 of the first nut screws 15, 16 and third nut screws 19, 20 in such a way as that the outer wall 23a of the flat countersunk head 23 is coplanar to the outer face 3b, 4b of the shaped jaws 3, 4.

It is understood that in other embodiments of the invention, not shown, the first fastening means may include a number of first through nut screws and, therefore, of second and third nut screws, different from that one described above, with this number that could vary at will starting from one.

As far as the second fastening means 7 introduced before are concerned, they include:
- a through opening 26, made in the rear block 2 extending both the spacing tooth 9 and the base sector 8 according to a linear axis Y orthogonal to the longitudinal axis X defined by the screw nuts 14, 15, 16, 17, 18 and 19 and the main development axis Z of the spacing tooth 9;
- screw means, not shown in the attached figures for the sake of simplicity, contained in the through opening 26 and suitable to engage at least partly the structural element of the technical structure.

At the intermediate zone 27a, the inner wall 27 delimiting the through opening 26 is preferably provided with an annular shoulder 28 which determines for the through opening 26 itself a change in diameter starting from such an intermediate zone 27a.

The head of the screw means just cited is positioned close to the annular shoulder 28, thus resulting totally and advantageously housed into the largest diameter portion of the through opening 26.

In this way, the screw means are completely contained and, therefore, hidden in the rear block 2, leading to the dual advantage of not interfering with the slab when house in the side seat 5 and positioned close to the front surface 9a of the spacing tooth 9 and not affect in any way the aesthetic effect of the technical structure as a whole.

At preferential but not binding title, the modular pliers 1 comprise stiffening means, applied to the inner face 3a, 4a of both the shaped jaws 3, 4 in order to interpose between the spacing tooth 9 of the rear block 2 and the shaped jaws 3, 4.

The stiffening means include, mainly, a pair of rubber gaskets 29, 30 fixed to the main section 31 of the inner face 3a, 4a of the respective shaped jaws 3, 4.

Operatively, whereas the modular pliers 1 are intended to be applied to a bearing structural element, usually a vertical upright, positioned at the end of a technical furniture, protection and/or delimitation structure, the operations performed essentially occur according to the following modes.

Firstly, the operator places the rear block 2 close to the side wall of such a bearing structural element, in the chosen and correct position for the final configuration of the entire technical structure in question.

In a second time, by the second fastening means 7, the operator fixes the rear block 2 to the bearing structural element of the technical structure that is under construction.

Once the rubber gaskets 29, 30 have been applied to the main section 31 of the inner face 3a, 4a of the shaped jaws 3, 4, the operator draws near one of the latter to the spacing tooth 9 of the rear block 2, combining the lower section 12 to the outer wall 8c of the same base sector 8 and placing the transverse wall 14 close to the second lateral face 8b of the base sector 8.

Subsequently, the operator firmly couples the shaped jaw 3 to the rear block 2 by engaging the screws 21 with the first through nut screws 15, 16 and partially with the second through nut screws 17, 18.

Then, the operator supports the edge of the slab onto the front surface 9a of the spacing tooth 9 and finally firmly coupled with the rear block 2 even the other shaped jaw 4, as done for the shaped jaw 3.

This means that the operator conjugates the lower section 12 to the outer wall 8d of the base sector 8, positioning the transverse wall 14 close to the second lateral face 8b of the base sector 8, and engages the screws 22 with the third through nut screws 19, 20 and partially with the second through nut screws 17, 18, on the opposite side with respect to the first screws 21.

The slab of the technical structure is thus contained in the side seat 5, clamped between the shaped jaws 3, 4 of the modular pliers 1 just placed in their final operative configuration.

If an operator wishes or is forced to replace the slab just assembled with another one of different thicknesses, it will simply sufficient that he initially releases the shaped jaws 3, 4 from the rear block 2, by removing the screws 20, 21 from the screw nuts, 15, 16, 17, 18, 19, 20, and then the rear block 2 from the bearing structural element, by removing the screw means from the through opening 26.

At that point, the operator replaces only the rear block 2 with another one comprising a spacing tooth 9 having width L greater or lower than the rear block 2 just used, such a width L depending on the new thickness of the new slab to be coupled with the structural element of the technical structure.

The shaped jaws 3, 4, indeed, remain the same as those ones used for the modular pliers 1 previously used, since the length of the spacing tooth 9 of the rear block 2, calculated according to the main development axis Z, does not vary in the different pliers designed according to the invention.

On the basis of the foregoing, it is, therefore, understood that the modular pliers for arranging technical furniture, protection and/or delimitation structures of the invention achieve the purposes and reach the advantages mentioned above.

In execution phase, changes could be made to the modular pliers of the invention consisting of, for example, shaped jaws coupled with the rear block in such a way as to define more than one side seat suitable to house the perimetrical portion of a slab or panel belonging to the technical structure.

In such a case, the modular pliers of the invention will be properly fixed to a bearing structural element (upright or column) placed in inner zones of the technical structure.

In addition, further embodiments of the modular pliers here claimed could subsist wherein the first fastening means used to firmly connect the shaped jaws with the rear block are different from those ones previously described, which does not affect the advantage brought by the present invention.

It is clear that many other variations may be made to the modular pliers in question, without departing from the principle of novelty intrinsic in the inventive idea expressed here, as it is clear that, in the practical implementation of the invention, materials, shapes and sizes of the illustrated details can be changed, as needed, and replaced with others technically equivalent.

Where the constructive features and techniques mentioned in the following claims are followed by reference numbers or signs, those reference signs have been introduced with the sole objective of increasing the intelligibility of the claims themselves and therefore they have no limiting effect on the interpretation of each element identified, by way of example only, by these reference signs.

## Claims

1. Modular pliers (1) for arranging technical furniture, protection and/or delimitation structures comprising:
- a rear block (2) suitable to be firmly coupled with the side wall of a bearing structural element of said technical structure;
- a pair of shaped jaws (3, 4) associated with said rear block (2) and placed opposite, facing and spaced apart from each other in order to define at least one side seat (5) communicating with the outside and suitable to house a perimetrical portion of a slab clamped between said shaped jaws (3, 4) and belonging to said technical structure,
wherein said shaped jaws (3, 4) are two from distinct pieces and separated from each other and from said rear block (2) with which they are firmly and removably coupled through first fastening means (6), **characterized in that** it include second fastening means (7) suitable to firmly connect said rear block (2) with said structural element.

2. Pliers (1) defined in as claim 1) **characterized in that** said rear block (2) is composed of:
- a base sector (8) presenting a first lateral face (8a) suitable to be conjugated to said side wall of said structural element of said technical structure;
- a spacing tooth (9), interposed between said shaped jaws (3, 4) and protruding from the central area of a second lateral face (8b), opposite to said first face (8a), of said base sector (8) so as to define with said base sector (8) a pair of linear steps (10, 11) positioned laterally to said spacing tooth (9) symmetrically with respect to the main development axis (Z) of said spacing tooth (9).

3. Pliers (1) as defined in claim 2) **characterized in that** said spacing tooth (9) is monolithic with said base sector (8) and presents a front surface (9a) facing said side seat (5) and two lateral surfaces (9b, 9c) defining planes equal and parallel each other.

4. Pliers (1) as defined in claim 2) or 3) **characterized in that** said base sector (8) presents two outer walls (8c, 8d) defining planes equal and parallel each other and close to which a lower stretch (12) of the inner face (3a, 4a) of said shaped jaws (3, 4) is positioned.

5. Pliers as defined in claim 2), 3) or 4) **characterized in that** said first lateral face of said base sector presents a linear profile in cross section.

6. Pliers (1) as defined in claim 2), 3) or 4) **characterized in that** said first lateral face (8a) of said base sector (8) presents a concave profile in cross section.

7. Pliers (1) as defined in any one of the claims from 2) to 6) **characterized in that** said spacing tooth (9) presents in cross section a quadrilateral profile and a width (L) suitable to be varied in production phase depending on the thickness of said slab housed in said side seat (5) and clamped between said shaped jaws (3, 4).

8. Pliers (1) as defined in any one of the claims from 3) to 7) **characterized in that** each of said shaped jaws (3, 4) presents a longitudinal undercut (13), made in said inner face (3a, 4a) starting from the lower edge (3c, 4c) to the central area of each of said shaped jaws (3, 4) and defining said lower stretch (12), placed close to one of said outer walls (8c, 8d) of said base sector (8), and a transverse wall (14) arranged close to said second face (8b) of said base sector (8) along each of said linear steps (10, 11).

9. Pliers (1) as defined in claim 8) **characterized in that** said lower stretch (12) of said inner face (3a, 4a) of each of said shaped jaws (3, 4) presents substantially the same height (H) of each of said outer walls (8c, 8d) of said base sector (8).

10. Pliers (1) as defined in anyone of the claims from 3) to 9) **characterized in that** said first fastening means (6) include:
- at least one first through nut screw (15, 16) made in a first of said shaped jaws (3, 4) at said lower stretch (12) according to a longitudinal axis (X) orthogonal to the plane (Π) defined by said inner face (3a, 4a) of each of said shaped jaws (3, 4);
- at least a second through nut screw (17, 18) made in said spacing tooth (9) and coaxial to said first nut screw (15, 16);
- at least a third through nut screw (19, 20) made in the other of said shaped jaws (3, 4) at said lower stretch (12) and coaxial to said first (15, 16) and second nut screw (17, 18);
- at least a couple of screws (21, 22), a first screw (21) engaging into said first nut screw (15, 16) and partially into said second nut screw (17, 18) and a second screw (22) engaging into said third nut screw (19, 20) and partially into said second nut screw (17, 18) on the opposite side with respect to said first screw (21).

11. Pliers (1) as defined in claim 10) **characterized in that** each of said screws (21, 22) is of the flat countersunk head (23) type which is housed in an annular groove (24) made around the inlet (25) of said first (15, 16) and third nut screws (19, 20) so that the outer wall (23a) of said flat countersunk head (23) is coplanar to the outer face (3b, 4b) of said shaped jaws (3, 4).

12. Pliers (1) as defined in claim 10) or 11) **characterized in that** said second fastening means (7) include:
- a through opening (26), made in said rear block (2) extending along said spacing tooth (9) and said base sector (8) according to a linear axis (Y) orthogonal to said longitudinal axis (X) defined by said nut screws (15, 16, 17, 18, 19, 20);
- screw means contained into said through opening (26) and suitable to engage into said structural element of said technical structure.

13. Pliers (1) as defined in claim 12) **characterized in that**, at the intermediate zone (27a), the inner wall (27) delimiting said through opening (26) is provided with an annular shoulder (28) which determines for said through opening (26) a change in diameter starting from said intermediate zone (27a) and against which the head of said screw means, completely housed into the largest diameter portion of said through opening (26), is arranged close.

## Patentansprüche

1. Modulare Klemmen (1) zum Anordnen technischer Möbel-, Schutz - und/oder Abgrenzungsstrukturen, umfassend:
- einen hinteren Block (2), der dafür geeignet ist, mit der Seitenwand eines tragenden Strukturelements der technischen Struktur fest gekoppelt zu werden;
- ein Paar Formklemmbacken (3, 4), die dem hinteren Block (2) zugeordnet sind und gegenüberliegend, einander zugewandt und voneinander beabstandet angeordnet sind, um wenigstens einen Seitensitz (5) zu definieren, der mit der Außenseite in Verbindung steht und dafür geeignet ist, ein Umfangsteil einer Platte aufzunehmen, die zwischen die Formklemmbacken (3, 4) geklemmt ist und die zu der technischen Struktur gehört,
wobei die Formklemmbacken (3, 4) zwei verschiedene Teile sind und voneinander und von dem hinteren Block (2), mit dem sie durch erste Befestigungsmittel (6) fest und lösbar gekoppelt sind, getrennt sind, **dadurch gekennzeichnet, dass** sie zweite Befestigungsmittel (7) enthalten, die dafür geeignet ist, den hinteren Block (2) fest mit dem Strukturelement zu verbinden.

2. Klemmen (1) nach Anspruch 1), **dadurch gekennzeichnet, dass** der hintere Block (2) aus Folgendem zusammengesetzt ist:
- ein Basissektor (8), der eine erste Seitenfläche (8a) präsentiert, die dafür geeignet ist, mit der Seitenwand des Strukturelements der technischen Struktur konjugiert zu sein;
- ein Abstandszahn (9), der zwischen den Formklemmbacken (3, 4) angeordnet ist und aus dem Mittelbereich einer zweiten Seitenfläche (8b), die der ersten Fläche (8a) gegenüberliegt, des Basissektors (8) in der Weise vorsteht, dass mit dem Basissektor (8) ein Paar linearer Stufen (10, 11) definiert wird, die seitlich zu dem Abstandszahn (9) symmetrisch in Bezug auf die Hauptentwicklungsachse (Z) des Abstandszahns (9) positioniert sind.

3. Klemmen (1) nach Anspruch 2), **dadurch gekennzeichnet, dass** der Abstandszahn (9) monolithisch mit dem Basissektor (8) ist und eine vordere Oberfläche (9a), die dem Seitensitz (5) zugewandt ist, und zwei Seitenoberflächen (9b, 9c), die gleiche und zueinander parallele Ebenen definieren, präsentiert.

4. Klemmen (1) nach Anspruch 2) oder 3), **dadurch gekennzeichnet, dass** der Basissektor (8) zwei Außenwände (8c, 8d) aufweist, die gleiche und zueinander parallele Ebenen definieren und in deren Nähe eine untere Strecke (12) der Innenfläche (3a, 4a) der Formklemmbacken (3, 4) positioniert ist.

5. Klemmen nach Anspruch 2), 3) oder 4), **dadurch gekennzeichnet, dass** die erste Seitenfläche des Basissektors im Querschnitt ein lineares Profil präsentiert.

6. Klemmen (1) nach Anspruch 2), 3) oder 4), **dadurch gekennzeichnet, dass** die erste Seitenfläche (8a) des Basissektors (8) im Querschnitt ein konkaves Profil präsentiert.

7. Klemmen (1) nach einem der Ansprüche 2) bis 6), **dadurch gekennzeichnet, dass** der Abstandszahn (9) im Querschnitt ein vierseitiges Profil und eine Breite (L), die geeignet ist, in der Produktionsphase in Abhängigkeit von der Dicke der in dem Seitensitz (5) aufgenommenen und zwischen die Formklemmbacken (3, 4) geklemmten Platte geändert zu werden, präsentiert.

8. Klemmen (1) nach einem der Ansprüche 3) bis 7), **dadurch gekennzeichnet, dass** jede der Formklemmbacken (3, 4) einen längsgerichteten Unterschnitt (13), der in der Innenfläche (3a, 4a) beginnend von der Unterkante (3c, 4c) bis zu dem zentralen Bereich jeder der Formklemmbacken (3, 4) hergestellt ist und die untere Strecke (12) definiert, die in der Nähe einer der Außenwände (8c, 8d) des Basissektors (8) platziert ist, und eine Querwand (14), die in der Nähe der zweiten Fläche (8b) des Basissektors (8) entlang jeder der linearen Stufen (10, 11) angeordnet ist, präsentiert.

9. Klemmen (1) nach Anspruch 8), **dadurch gekennzeichnet, dass** die untere Strecke (12) der Innenfläche (3a, 4a) jeder der Formklemmbacken (3, 4) im Wesentlichen dieselbe Höhe (H) von jeder der Außenwände (8c, 8d) des Basissektors (8) präsentiert.

10. Klemmen (1) nach einem der Ansprüche 3) bis 9), **dadurch gekennzeichnet, dass** die ersten Befestigungsmittel (6) enthalten:
- wenigstens ein erstes Durchgangsinnengewinde (15, 16), das in einer ersten der Formklemmbacken (3, 4) bei der unteren Strecke (12) in Übereinstimmung mit einer Längsachse (X) orthogonal zu der durch die Innenfläche (3a, 4a) definierten Ebene (Π) jeder der Formklemmbacken (3, 4) hergestellt ist;
- wenigstens ein zweites Durchgangsinnengewinde (17, 18), das in dem Abstandszahn (9) und koaxial zu dem ersten Innengewinde (15, 16) hergestellt ist;
- wenigstens ein drittes Durchgangsinnengewinde (19, 20), das in der anderen der Formklemmbacken (3, 4) bei der unteren Strecke (12) und koaxial zu dem ersten (15, 16) und zu dem zweiten Innengewinde (17, 18) hergestellt ist;
- wenigstens ein Paar von Schrauben (21, 22), wobei eine erste Schraube (21) in dem ersten Innengewinde (15, 16) und teilweise in dem zweiten Innengewinde (17, 18) in Eingriff ist und wobei eine zweite Schraube (22) in dem dritten Innengewinde (19, 20) und teilweise in dem zweiten Innengewinde (17, 18) auf der der ersten Schraube (21) gegenüberliegenden Seite in Eingriff ist.

11. Klemmen (1) nach Anspruch 10), **dadurch gekennzeichnet, dass** jede der Schrauben (21, 22) vom Typ mit ebenem Senkkopf (23) ist, der in einer Ringrille (24) aufgenommen ist, die um die Eintrittsöffnung (25) des ersten (15, 16) und des dritten Innengewindes (19, 20) in der Weise hergestellt ist, dass die Außenwand (23a) des ebenen Senkkopfs (23) koplanar mit der Außenfläche (3b, 4b) der Formklemmbacken (3, 4) ist.

12. Klemmen (1) nach Anspruch 10) oder 11), **dadurch gekennzeichnet, dass** die zweiten Befestigungsmittel (7) enthalten:
- eine Durchgangsöffnung (26), die in dem hinteren Block (2) hergestellt ist und die entlang des Abstandszahns (9) und des Basissektors (8) in Übereinstimmung mit einer linearen Achse (Y) orthogonal zu der durch die Innengewinde (15, 16, 17, 18, 19, 20) definierten Längsachse (X) verläuft;
- Schraubenmittel, die in der Durchgangsöffnung (26) enthalten sind und die geeignet sind, in dem Strukturelement der technischen Struktur in Eingriff zu gelangen.

13. Klemmen (1) nach Anspruch 12), **dadurch gekennzeichnet, dass** die Innenwand (27), die die Durchgangsöffnung (26) abgrenzt, in der Zwischenzone (27a) mit einer ringförmigen Schulter (28) versehen ist, die für die Durchgangsöffnung (26) eine Änderung des Durchmessers bestimmt, die von der Zwischenzone (27a) beginnt und gegen die der Kopf der in dem Abschnitt mit dem größten Durchmesser der Durchgangsöffnung (26) vollständig aufgenommenen Schraubenmittel festsitzend angeordnet ist.

## Revendications

1. Pince modulaire (1) pour l'agencement de structures techniques d'ameublement, de protection et/ou de délimitation, comprenant :
- un bloc arrière (2) apte à être couplé fermement à la paroi arrière d'un élément structurel porteur de ladite structure technique ;
- une paire de mâchoires profilées (3, 4) associées audit bloc arrière (2) et placées en opposition, en regard et à distance l'une de l'autre de façon à définir au moins un siège latéral (5) communiquant avec l'extérieur et apte à loger une partie périphérique d'une plaque serrée entre lesdites mâchoires profilées (3, 4) et appartenant à ladite structure technique,
dans laquelle lesdites mâchoires profilées (3, 4) sont deux pièces distinctes et séparées l'une de l'autre et dudit bloc arrière (2) avec lequel elles sont couplées fermement et de façon détachable par l'intermédiaire de premiers moyens de fixation (6), **caractérisée en ce qu'**elle comprend des seconds moyens de fixation (7) aptes à relier fermement ledit bloc arrière (2) audit élément structurel.

2. Pince (1) telle que définie dans la revendication 1, **caractérisée en ce que** ledit bloc arrière (2) est composé de :
- un secteur de base (8) présentant une première face latérale (8a) apte à être conjuguée à ladite paroi latérale dudit élément structurel de ladite structure technique ;
- une dent d'espacement (9), intercalée entre lesdites mâchoires profilées (3, 4) et faisant saillie de la zone centrale d'une seconde face latérale (8b), opposée à ladite première face (8a), dudit secteur de base (8), de façon à définir avec ledit secteur de base (8) une paire de gradins linéaires (10, 11) positionnés latéralement à ladite dent d'espacement (9), symétriquement par rapport à l'axe de développement principal (Z) de ladite dent d'espacement (9).

3. Pince (1) telle que définie dans la revendication 2, **caractérisée en ce que** ladite dent d'espacement (9) est formée d'un seul tenant avec ledit secteur de base (8) et présente une surface avant (9a) faisant face audit siège latéral (5) et deux surfaces latérales (9b, 9c) définissant des plans égaux et parallèles entre eux.

4. Pince (1) telle que définie dans la revendication 2 ou 3, **caractérisée en ce que** ledit secteur de base (8) présente deux parois extérieures (8c, 8d) définissant des plans égaux et parallèles entre eux et à proximité desquelles est positionnée une étendue inférieure (12) de la face intérieure (3a, 4a) desdites mâchoires profilées (3, 4).

5. Pince (1) telle que définie dans la revendication 2, 3 ou 4, **caractérisée en ce que** ladite première face latérale dudit secteur de base présente un profil linéaire en coupe transversale.

6. Pince (1) telle que définie dans la revendication 2, 3 ou 4, **caractérisée en ce que** ladite première face latérale (8a) dudit secteur de base (8) présente un profil concave en coupe transversale.

7. Pince (1) telle que définie dans l'une quelconque des revendications 2 à 6, **caractérisée en ce que** ladite dent d'espacement (9) présente en section transversale un profil quadrilatéral et une largeur (L) apte à être changée en phase de production en fonction de l'épaisseur de ladite plaque logée dans ledit siège latéral (5) et serrée entre lesdites mâchoires profilées (3, 4).

8. Pince (1) telle que définie dans l'une quelconque des revendications 3 à 7, **caractérisée en ce que** chacune desdites mâchoires profilées (3, 4) présente un dégagement longitudinal (13), formé dans ladite face intérieure (3a, 4a) à partir du bord inférieur (3c, 4c) de la zone centrale de chacune desdites mâchoires profilées (3, 4) et définissant ladite étendue inférieure (12), placée à proximité de l'une desdites parois extérieures (8c, 8d) dudit secteur de base (8), et une paroi transversale (14) disposée à proximité de ladite seconde face (8b) dudit secteur de base (8) le long de chacun desdits gradins linéaires (10, 11).

9. Pince (1) telle que définie dans la revendication 8, **caractérisée en ce que** ladite étendue inférieure (12) de ladite face intérieure (3a, 4a) de chacune desdites mâchoires profilées (3, 4) présente essentiellement la même hauteur (H) que chacune desdites parois extérieures (8c, 8d) dudit secteur de base (8).

10. Pince (1) telle que définie dans l'une quelconque des revendications 3 à 9, **caractérisée en ce que** lesdits premiers moyens de fixation (6) comprennent :
- au moins un premier écrou de vis débouchant (15, 16) formé dans une première desdites mâchoires profilées (3, 4) au niveau de ladite étendue inférieure (12) selon un axe longitudinal (X) orthogonal au plan (Π) défini par ladite face intérieure (3a, 4a) de chacune desdites mâchoires profilées (3, 4) ;
- au moins un deuxième écrou de vis débouchant (17, 18) formé dans ladite dent d'espacement (9) et coaxial audit premier écrou de vis (15, 16) ;
- au moins un troisième écrou de vis débouchant (19, 20) formé dans l'autre desdites mâchoires profilées (3, 4) au niveau de ladite étendue inférieure (12) et coaxial auxdits premier (15, 16) et deuxième (17, 18) écrous de vis;
- au moins un couple de vis (21, 22), une première vis (21) s'engageant dans ledit premier écrou de vis (15, 16) et partiellement dans ledit deuxième écrou de vis (17, 18) et une deuxième vis (22) s'engageant dans ledit troisième écrou de vis (19, 20) et partiellement dans ledit deuxième écrou de vis (17, 18) du côté opposé par rapport à ladite première vis (21).

11. Pince (1) telle que définie dans la revendication 10, **caractérisée en ce que** chacune desdites vis (21, 22) est du type à tête fraisée plate (23) qui est logée dans une rainure annulaire (24) formée autour de l'entrée (25) desdits premier (15, 16) et troisième (19, 20) écrous de vis, de telle sorte que la paroi extérieure (23a) de ladite tête fraisée plate (23) soit coplanaire à la face extérieure (3b, 4b) desdites mâchoires profilées (3, 4).

12. Pince (1) telle que définie dans la revendication 10 ou 11, **caractérisée en ce que** lesdits seconds moyens de fixation (7) comprennent :
- une ouverture débouchante (26), formée dans ledit bloc arrière (2) s'étendant le long de ladite dent d'espacement (9) et ledit secteur de base (8) selon un axe linéaire (Y) orthogonal audit axe longitudinal (X) défini par lesdits écrous de vis (15, 16, 17, 18, 19, 20) ;
- des moyens à vis contenus dans ladite ouverture débouchante (26) et aptes à s'engager dans ledit élément structurel de ladite structure technique.

13. Pince (1) telle que définie dans la revendication 12, **caractérisée en ce que**, au niveau de la zone intermédiaire (27a), la paroi intérieure (27) délimitant ladite ouverture débouchante (26) est pourvue d'un épaulement annulaire (28) qui détermine pour ladite ouverture débouchante (26) un changement de diamètre à partir de ladite zone intermédiaire (27a) et contre lequel la tête desdits moyens à vis, complètement logée dans la partie de plus grand diamètre de ladite ouverture débouchante (26), est disposée en étroite proximité.
